# EUROPEAN PATENT APPLICATION

(11) **EP 2 306 238 A1**
(43) Date of publication of application: **06.04.2011**
(21) Application number: 09769917.7
(22) Date of filing: 26.06.2009
(51) Int. Cl.: G02F 1/1337, C08F 20/00

(54) **LIQUID CRYSTAL DISPLAY DEVICE AND MANUFACTURING METHOD THEREFOR**

(30) Priority: 27.06.2008 JP 2008169036
(71) Applicant: Sharp Kabushiki Kaisha, Osaka-shi, Osaka 545-8522 (JP)
(72) Inventor: MIZUSAKI, Masanobu, Osaka-shi Osaka 545-8522 (JP); NAKAMURA, Kimiaki, Osaka-shi Osaka 545-8522 (JP); NAKANISHI, Yohei, Osaka-shi Osaka 545-8522 (JP); YAMADA, Yuichiro, Osaka-shi Osaka 545-8522 (JP)
(74) Representative: Müller - Hoffmann & Partner
(86) International application number: PCT/JP2009/002934
(87) International publication number: WO 2009/157207

(57) **Abstract**

A liquid crystal display device **(100)** according to the present invention includes an active matrix substrate **(120),** a counter substrate **(140),** and a vertical-alignment type liquid crystal layer **(160)** provided between the active matrix substrate **(120)** and the counter substrate **(140).** At least one of the active matrix substrate **(120)** and the counter substrate **(140)** includes a photo-alignment film **(128, 148).** The liquid crystal display device **(100)** further includes an alignment sustaining layer **(130, 150)** provided between the photo-alignment film **(128, 148)** and the liquid crystal layer **(160).** The alignment sustaining layer **(130, 150)** contains a polymer **(132, 152)** resulting from polymerization of a photopolymerizable compound.

## Description

### TECHNICAL FIELD

The present invention relates to a liquid crystal display device and a production method thereof.

### BACKGROUND ART

Liquid crystal display devices are used not only as small-sized display devices, e.g., the display sections of mobile phones, but also as large-sized television sets. Liquid crystal display devices of the TN (Twisted Nematic) mode, which have often been used conventionally, have relatively narrow viewing angles. In recent years, however, liquid crystal display devices with wide viewing angles have been produced, e.g., the IPS (In-Plane Switching) mode and the VA (Vertical Alignment) mode. Among such modes with wide viewing angles, the VA mode is adopted in a large number of liquid crystal display devices because of an ability to realize a high contrast ratio.

As one kind of VA mode, the MVA (Mutli-domain Vertical Alignment) mode is known, under which a plurality of liquid crystal domains are created in one pixel region. An MVA-mode liquid crystal display device includes alignment regulating structures provided on the liquid-crystal-layer side of at least one of a pair of opposing substrates, between which a vertical-alignment type liquid crystal layer is interposed. The alignment regulating structures may be linear slits (apertures) or ribs (protruding structures) that are provided on electrodes, for example. The alignment regulating structures provide alignment regulating forces from one side or both sides of the liquid crystal layer, thus creating a plurality of liquid crystal domains (typically four liquid crystal domains) with different alignment directions, whereby the viewing angle characteristics are improved.

Also known as one kind of VA mode is the CPA (Continuous Pinwheel Alignment) mode. In a generic liquid crystal display device of the CPA mode, pixel electrodes of a highly symmetrical shape are provided, and on a counter electrode, protrusions are provided corresponding to the centers of liquid crystal domains. These protrusions are also referred to as rivets. When a voltage is applied, in accordance with an oblique electric field which is created with the counter electrode and a highly symmetrical pixel electrode, liquid crystal molecules take an inclined alignment of a radial shape. Moreover, the inclined alignment of the liquid crystal molecules are stabilized due to the alignment regulating forces of side slopes of the rivets. Thus, the liquid crystal molecules in one pixel are aligned in a radial shape, thereby improving the viewing angle characteristics.

Unlike in TN-mode liquid crystal display devices in which the pretilt direction of liquid crystal molecules is defined by an alignment film, alignment regulating forces in an MVA-mode liquid crystal display device are applied to the liquid crystal molecules by linear slits or ribs. Therefore, depending on distances from the slits and ribs, the alignment regulating forces for the liquid crystal molecules within a pixel region will differ, thus resulting in differing response speeds of the liquid crystal molecules within the pixel. Similarly, also in the CPA mode, the response speeds of the liquid crystal molecules will differ within the pixel, and the differences in response speed will become more outstanding as the pixel electrodes increase in size. Furthermore, in a VA-mode liquid crystal display device, the light transmittance in the regions in which slits, ribs, or rivets are provided is low, thus making it difficult to realize a high luminance.

In order to avoid the above problems, use of an alignment film for applying alignment regulating forces to liquid crystal molecules in a VA-mode liquid crystal display device is also known, such that the liquid crystal molecules will tilt from the normal direction of a principal face of the alignment film in the absence of an applied voltage (see, for example, Patent Document 1). The alignment film aligns the liquid crystal molecules so that the liquid crystal molecules will be tilted from the normal direction of its principal face even in the absence of an applied voltage, whereby an improved response speed is realized. Furthermore, since the alignment film defines the pretilt azimuth of liquid crystal molecules so that the liquid crystal molecules within one pixel will be symmetrically aligned, the viewing angle characteristics are improved. In a liquid crystal display device disclosed in Patent Document 1, four liquid crystal domains are formed in a liquid crystal layer in accordance with a combination of two alignment regions of a first alignment film and two alignment regions of a second alignment film, whereby a wide viewing angle is realized.

However, a liquid crystal display device whose liquid crystal molecules have their pretilt direction defined in this manner may not have a sufficient long-term reliability. Patent Document 2 discloses improving long-term reliability by providing not only a vertical alignment film (first alignment layer) which has been subjected to a rubbing treatment, but also another alignment layer (second alignment layer) which is formed by radiating ultraviolet light onto a polymerizable compound (e.g., a photopolymerizable monomer) which is mixed in the liquid crystal material.

However, when a rubbing treatment is performed as disclosed in Patent Document 2, the alignment film may be damaged to generate impurities, or cause static electricity, thus degrading the production yield. Therefore, in order to realize an improved response speed without performing a rubbing treatment, a pretilt may be applied so that the liquid crystal molecules will be tilted from the normal direction of a principal face of the alignment film in the absence of an applied voltage (see Patent Documents 3 and 4). Such a technique is referred to as a Polymer Sustained Alignment Technology (hereinafter, referred to as the "PSA technique"). In the PSA technique, the pretilt direction of the liquid crystal molecules is controlled by a polymer that is generated by irradiating the polymerizable compound with an active energy ray (e.g., ultraviolet light) while applying a voltage to a liquid crystal layer in which a small amount of polymerizable compound (e.g., a photopolymerizable monomer) is mixed.

The liquid crystal display devices of Patent Documents 3 and 4 are based on an MVA mode such that slits or ribs are provided as alignment regulating structures. In the liquid crystal display device of Patent Document 3, linear slits and/or ribs are provided, and with a voltage application, the liquid crystal molecules are aligned so that the azimuth angle component of the liquid crystal molecules is orthogonal to the slits or ribs. When ultraviolet light is radiated in this state, a polymer is formed, whereby the alignment state of the liquid crystal molecules is maintained (stored). After this, even after the voltage application is terminated, the liquid crystal molecules will be tilted in a pretilt azimuth from the normal direction of a principal face of the alignment film.

Moreover, the liquid crystal display device of Patent Document 4 includes a minute stripe pattern of electrodes. When a voltage is applied across the liquid crystal layer, the liquid crystal molecules are aligned so as to be parallel to the longitudinal direction of the stripe pattern. This is in contrast to the liquid crystal display device of Patent Document 3, where the azimuth angle component of the liquid crystal molecules is orthogonal to the slits or ribs. Moreover, since a plurality of slits are provided, disorders in alignment are suppressed. In this state, ultraviolet light is radiated to maintain (store) the alignment state of the liquid crystal molecules. After this, even after the voltage application is terminated, the liquid crystal molecules will be tilted in a pretilt azimuth from the normal direction of a principal face of the alignment film. Thus, without performing a rubbing treatment, the liquid crystal molecules can be aligned so as to be tilted from the normal direction of a principal face of the alignment film.

### CITATION LIST

### PATENT LITERATURE

[Patent Document 1] Japanese Laid-Open Patent Publication No. 11-352486
[Patent Document 2] Japanese Patent No. 3520376
[Patent Document 3] Japanese Laid-Open Patent Publication No. 2002-357830
[Patent Document 4] Japanese Laid-Open Patent Publication No. 2003-149647

### SUMMARY OF INVENTION

### TECHNICAL PROBLEM

In the liquid crystal display devices of Patent Documents 3 and 4, slits or ribs for restricting the alginment directions of liquid crystal molecules are provided, and light irradiation is performed while tilting the liquid crystal molecules from the normal direction of a principal face of the alignment film by applying a voltage. Therefore, a complex fabrication apparatus is required which includes a device for applying a voltage to the liquid crystal panel and a device for radiating light.

Moreover, when forming a liquid crystal layer through dropwise application of a liquid crystal material, generally speaking, a plurality of liquid crystal panels are to be concurrently formed from a large-sized mother glass substrate. In this case, each liquid crystal panel is cut out from the large-sized mother glass substrate. In the case where a plurality of liquid crystal panels are concurrently formed, a design must be adopted such that special wiring lines are formed on the mother glass substrate for allowing a voltage to be simultaneously applied to the plurality of liquid crystal panels. In the case where a liquid crystal panel of a particularly large size is to be produced, it is difficult to uniformly apply a voltage across the liquid crystal layer in the respective pixels. If light irradiation is performed with non-uniform voltages being applied, there will be fluctuations in the pretilt angle.

The present invention has been made in view of the above problems, and an objective thereof is to provide a liquid crystal display device which can be easily produced without performing a rubbing treatment, as well as a production method thereof.

### SOLUTION TO PROBLEM

A liquid crystal display device according to the present invention is a liquid crystal display device including an active matrix substrate, a counter substrate, and a vertical-alignment type liquid crystal layer provided between the active matrix substrate and the counter substrate, wherein at least one of the active matrix substrate and the counter substrate includes a photo-alignment film, the liquid crystal display device further including: an alignment sustaining layer provided between the photo-alignment film and the liquid crystal layer, the alignment sustaining layer containing a polymer resulting from polymerization of a photopolymerizable compound.

In one embodiment, the photo-alignment film contains a polymer including a main chain and a side chain, the side chain having a cinnamate group.

In one embodiment, the liquid crystal display device has a plurality of pixels; and in each of the plurality of pixels, the liquid crystal layer has a plurality of liquid crystal domains with respectively different reference alignment azimuths.

In one embodiment, each of the active matrix substrate and the counter substrate includes the photo-alignment film, the plurality of liquid crystal domains being four liquid crystal domains.

In one embodiment, a pretilt angle of liquid crystal molecules in the liquid crystal layer is in a range from 85° to 89.7°.

In one embodiment, the photopolymerizable compound has at least one ring structure or condensed ring structure and at least one polymerizable functional group chemically bonded to the ring system or condensed ring system.

In one embodiment, the photopolymerizable compound is a polymerizable monomer; and the polymerizable monomer is represented by the general formula P1-A1-(Zl-A2)n-P2 (where P1 and P2 are, independently, acrylate, methacrylate, acrylamide, methacrylamide, vinyl, vinyloxy, or an epoxy group; A1 and A2 represent, independently, 1,4-phenylene or naphthalene -2,6-diyl group; Z1 is a -COO- or -OCO- group or a single bond; and n is 0, 1, or 2).

In one embodiment, P1 and P2 are acrylate groups; Z1 is a single bond; and n is 0 or 1.

In one embodiment, P1 and P2 are methacrylate groups; Z1 is a single bond; and n is 0 or 1.

In one embodiment, P1 and P2 are acrylamide groups; Z1 is a single bond; and n is 0 or 1.

In one embodiment, P1 and P2 are methacrylamide groups; Z1 is a single bond; and n is 0 or 1.

A production method for a liquid crystal display device according to the present invention includes: a step of providing an active matrix substrate and a counter substrate, where light is radiated to form a photo-alignment film over at least one of the active matrix substrate and the counter substrate; a step of forming a liquid crystal layer between the active matrix substrate and the counter substrate by providing a liquid crystal material between the active matrix substrate and the counter substrate, the liquid crystal material having a photopolymerizable compound mixed therein, and the photo-alignment film regulating liquid crystal molecules in the liquid crystal layer so that the liquid crystal molecules are aligned with a tilt from a normal direction of a principal face of the photo-alignment film in the absence of an applied voltage; and a step of forming an alignment sustaining layer between the photo-alignment film and the liquid crystal layer by polymerizing the photopolymerizable compound through light irradiation.

In one embodiment, in the step of forming the photo-alignment film, the photo-alignment film contains a polymer including a main chain and a side chain, the side chain having a cinnamate group.

In one embodiment, in the step of forming the alignment sustaining layer, the light irradiation is performed without applying a voltage across the liquid crystal layer.

In one embodiment, in the step of forming the photo-alignment film, the light has a wavelength in a range from 250 nm to 400 nm.

In one embodiment, in the step of forming the photo-alignment film, light is radiated from a direction which is inclined with respect to a normal direction of a principal face of at least one of the active matrix substrate and the counter substrate by no less than 5° and no more than 85°.

In one embodiment, in the step of forming the photo-alignment film, the light is unpolarized light.

In one embodiment, in the step of forming the photo-alignment film, the light is linearly polarized light, elliptically polarized light, or circularly polarized light.

### ADVANTAGEOUS EFFECTS OF INVENTION

According to the present invention, there is provided a liquid crystal display device which can be easily produced without performing a rubbing treatment, as well as a production method thereof.

### BRIEF DESCRIPTION OF DRAWINGS

[FIG. **1**] **(a)** is a schematic diagram of an embodiment of a liquid crystal display device according to the present invention; and **(b)** is a schematic diagram of a liquid crystal panel of the liquid crystal display device of the present embodiment.
[FIG. **2**] Schematic diagrams showing an alignment film and neighboring liquid crystal molecules in a liquid crystal display device of Comparative Example, where: **(a)** is a schematic diagram before voltage application; **(b)** is a schematic diagram during voltage application; and **(c)** is a schematic diagram after voltage application.
[FIG. **3**] Schematic diagrams showing an alignment film and neighboring liquid crystal molecules in a liquid crystal display device of the present embodiment, where: **(a)** is a schematic diagram before voltage application; **(b)** is a schematic diagram during voltage application; and **(c)** is a schematic diagram after voltage application.
[FIG. **4**] **(a)** to **(d)** are schematic diagrams each illustrating a production method of the liquid crystal display device of the present embodiment.
[FIG. **5**] **(a)** and **(b)** are schematic diagrams of an alignment film of the liquid crystal display device of the present embodiment, whereas **(c)** is a schematic diagram showing alignment directions of liquid crystal molecules in the center of a liquid crystal domain.
[FIG. **6**] A schematic diagram of a liquid crystal panel of Example 1.
[FIG. **7**] **(a)** and **(b)** are micrographs each showing polymers which are formed on the surface of an alignment film of the liquid crystal display device of Example 1.
[FIG. **8**] A schematic diagram of a liquid crystal panel of Comparative Example 1.
[FIG. **9**] **(a)** and **(b)** are micrographs each showing the surface of an alignment film of a liquid crystal display device of Comparative Example 1.
[FIG. **10**] A schematic diagram of a liquid crystal panel of Comparative Example 2.

### DESCRIPTION OF EMBODIMENTS

Hereinafter, with reference to the drawings, an embodiment of a liquid crystal display device according to the present invention will be described.

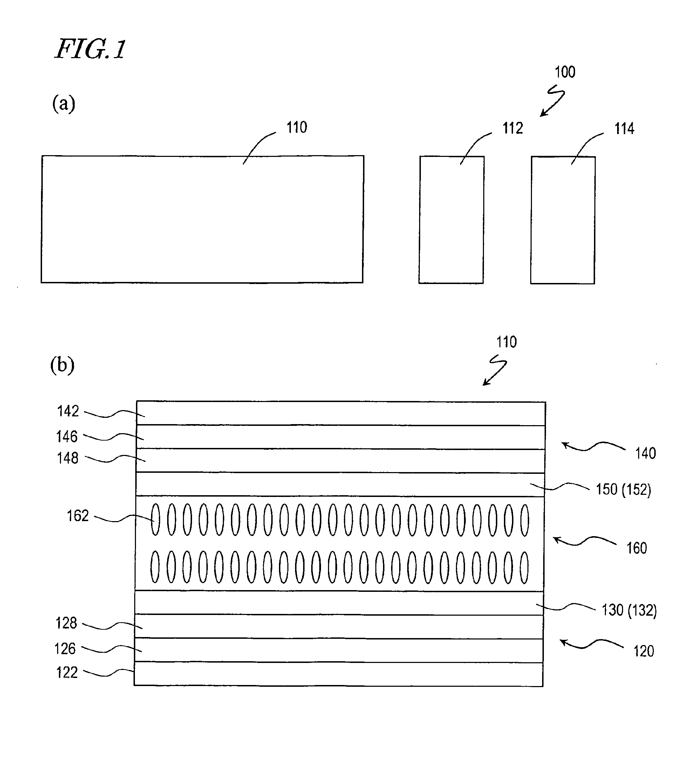

FIG. **1(a)** shows a schematic diagram of a liquid crystal display device **100** according to the present embodiment. The liquid crystal display device **100** includes a liquid crystal panel **110,** a driving circuit **112** for driving the liquid crystal panel **110,** and a control circuit **114** for controlling the driving circuit **112.** Although not shown, the liquid crystal display device **100** may include a backlight as necessary.

As shown in FIG. **1(b)****,** the liquid crystal panel **110** includes an active matrix substrate **120,** a counter substrate **140,** and a liquid crystal layer **160** of a vertical-alignment type. The active matrix substrate **120** includes a first transparent substrate **122,** a pixel electrode **126,** and a first alignment film **128.** The counter substrate **140** includes a second transparent substrate **142,** a counter electrode **146,** and a second alignment film **148.** The liquid crystal layer **160** is interposed between the active matrix substrate **120** and the counter substrate **140.**

The liquid crystal display device **100** includes pixels composing a matrix of a plurality of rows and a plurality of columns, and at least one switching element (e.g., a thin film transistor (TFT) (not shown in the figure) is provided for each pixel on the active matrix substrate **120.** In the present specification, a "pixel" refers to the smallest unit that expresses a specific gray scale level in displaying; in the case of multicolor displaying, a "pixel" corresponds to a unit that expresses a gray scale level of each of R, G, and B, for example, and is also referred to as a dot. A combination of an R pixel, a G pixel, and a B pixel composes a single color displaying pixel. A "pixel region" refers to a region of the liquid crystal panel **110** that corresponds to a "pixel" in displaying.

Although not shown, a polarizer is provided on each of the active matrix substrate **120** and the counter substrate **140.** Thus, the two polarizers are disposed so as to oppose each other with the liquid crystal layer **160** interposed therebetween. The transmission axes (polarization axes) of the two polarizers are positioned so as to be orthogonal to each other, such that one of them extends along the horizontal direction (row direction), whereas the other extends along the vertical direction (column direction).

The liquid crystal layer **160** contains a nematic liquid crystal material (liquid crystal molecules **162**) having negative dielectric anisotropy. The first alignment film **128** and the second alignment film **148** are each treated so that the pretilt angle of the liquid crystal molecules **162** is less than 90° with respect to the surface of the vertical alignment film. The pretilt angle of the liquid crystal molecules **162** is an angle between principal faces of the first alignment film **128** and the second alignment film **148** and the major axis of each liquid crystal molecule that is regulated in a pretilt direction. By irradiating the first or second alignment film **128** or **148** with light from a direction which is oblique to the normal direction of its principal face, an alignment regulating force is applied to the first or second alignment film **128** or **148** such that the liquid crystal molecules **162** are aligned with a tilt from the normal direction of the principal face of the alignment film in the absence of an applied voltage. Such a treatment is also referred to as a photo-alignment treatment. In the present specification, an alignment film which has been subjected to a photo-alignment treatment may also be referred to as a "photo-alignment film". Since a photo-alignment treatment is performed without involving any contact, static electricity will not occur due to friction as in a rubbing treatment, and thus the production yield can be improved. At the molecular level, chemical changes such as dimerization, bonding or dissociation of molecules will occur in an alignment film which has been subjected to a photo-alignment treatment, whereas no change in the state of bonding will occur in an alignment film which has been subjected to a rubbing treatment.

Moreover, the first and second alignment films **128** and **148** contain, for example, a polymer having a polyimide type (PI) main chain and a side chain which contains a cinnamate group as a photoreactive functional group, such that a dimerization site which is formed through light irradiation is provided on the side chain. Moreover, the side chain may contain a fluorine atom. By containing a fluorine atom, the "image sticking" described below will be suppressed to a certain extent, although not adequately.

For example, the main chain of the polymer of the first and second alignment films **128** and **148** is represented by the following structural formula.

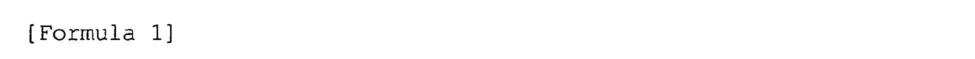

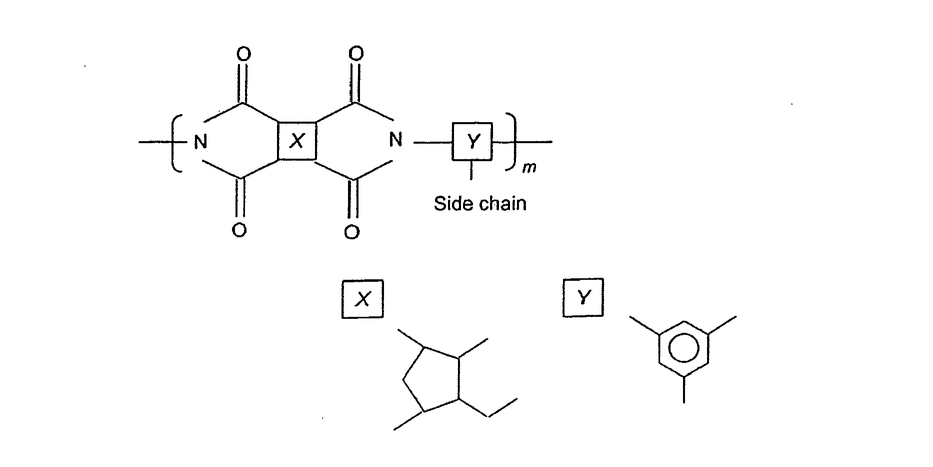

Alternatively, the main chain of the polymer of the first and second alignment films **128** and **148** may be one that is represented by the following structural formula.

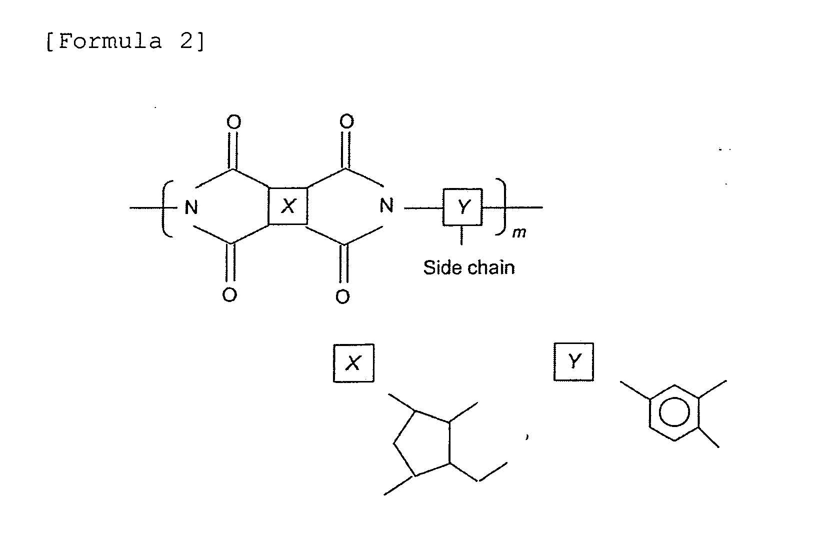

Note that the polymers represented by the different structural formulae above may be mixed such that one is present in at least a small amount.

Moreover, the side chain of the polymer of the first and second alignment films **128** and **148** is generally represented by the following structural formula.

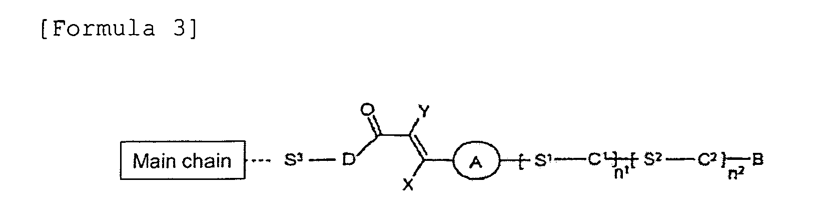

A represents pyrimidine-2,5-diyl, pyridine-2,5-diyl, 2,5-thiophenylene, 2,5-furanylene, 1,4-or 2,6-naphthylene, or phenylene, optionally substituted by a group selected from fluorine, chlorine, and cyano, or by a C₁₋₁₈ cyclic, straight-chain, or branched alkyl residue (which is optionally substituted by one cyano group or one or more halogen atoms, where one or more non-adjacent -CH₂- groups of the alkyl are optionally replaced by a group Q).

B is a straight-chain or branched alkyl residue which is unsubstituted, mono-substituted by cyano or halogen, or poly-substituted by halogen, having 3 to 18 carbon atoms (where one or more non-adjacent CH₂ groups may independently be replaced by a group Q).

C¹ and C² each independently of the other represent an aromatic or alicyclic group (which is unsubstituted or substituted by fluorine, chlorine, cyano, or by a cyclic, straight-chain, or branched alkyl residue (which is unsubstituted, mono-substituted by cyano or halogen, or poly-substituted by halogen, having 1 to 18 carbon atoms and where one or more non-adjacent CH₂ groups may independently be replaced by a group Q)). D represents an oxygen atom or - NR¹- (where R¹ represents a hydrogen atom or lower alkyl).

S¹ and S² each independently of the other represent a single covalent bond or a spacer unit. S³ represents a spacer unit.

Q represents a group selected from -O-, -CO-, -COO-, -O-CO-, -Si(CH₃)₂-O-Si(CH₃)₂-, -NR¹-, -NR¹-CO-, -CO-NR¹-, - NR¹-CO-O-, -O-CO-NR¹-, -NR¹-CO-NR¹-, -CH=CH-, -C≡C-, and -O-CO-O- (where R¹ represents a hydrogen atom or lower alkyl). X and Y each independently of the other represent hydrogen, fluorine, chlorine, cyano, alkyl optionally substituted by fluorine having carbon atoms 1 to 12 (where optionally one or more non-adjacent CH₂ groups are replaced by -O-, -CO-O-, -O-CO- and/or -CH=CH-).

Herein, it is preferable that A includes an aromatic compound; B includes fluorocarbon; D includes at least one or more hydrocarbon groups; and X and Y include hydrogen atoms.

More specifically, the side chain of the polymer of the first and second alignment films **128** and **148** is represented by the following structural formula, for example.

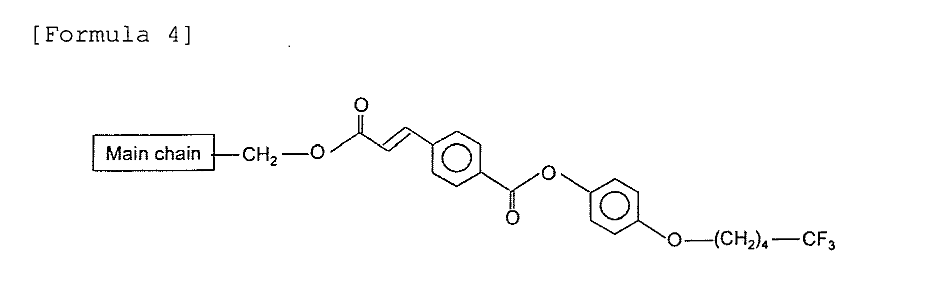

Each of the first and second alignment films **128** and **148** may have a plurality of alignment regions for each pixel. For example, a portion of the first alignment film **128** may be masked, and after a predetermined region of the first alignment film **128** is irradiated with light from a certain direction, another region which was not irradiated with light may be irradiated with light from a different direction. The second alignment film **148** is similarly formed. In this manner, regions subjected to alignment regulating forces can be created in each of the first and second alignment films **128** and **148.**

Although the liquid crystal layer **160** is of a vertical-alignment type, the liquid crystal molecules **162** near their interfaces with the active matrix substrate **120** and the counter substrate **140** are slightly tilted from the normal directions of the principal faces of the first and second alignment films **128** and **148.** The pretilt angle is within a range from 85° to 89.7°, for example.

Moreover, the pretilt azimuth of the liquid crystal molecules **162** introduced by the first alignment film **128** is different from the pretilt azimuth of the liquid crystal molecules **162** introduced by the second alignment film **148.** For example, the pretilt azimuth of the liquid crystal molecules **162** introduced by the first alignment film **128** intersects, at 90°, the pretilt azimuth of the liquid crystal molecules **162** introduced by the second alignment film **148.** Herein, the liquid crystal layer **160** does not include any chiral agent, so that, when a voltage is applied across the liquid crystal layer **160,** the liquid crystal molecules within the liquid crystal layer **160** take a twist alignment in accordance with the alignment regulating forces from the first and second alignment films **128** and **148.** However, a chiral agent may be added to the liquid crystal layer **160** as necessary. In combination with polarizers which are placed in crossed Nicols, the liquid crystal layer **160** performs displaying in a normally black mode.

In the liquid crystal display device **100** of the present embodiment, a first alignment sustaining layer **130** is provided between the first alignment film **128** and the liquid crystal layer **160.** The first alignment sustaining layer **130** contains a polymer **132,** which is a polymerized form of a photopolymerizable compound. Moreover, a second alignment sustaining layer **150** is provided between the second alignment film **148** and the liquid crystal layer **160.** The second alignment sustaining layer **150** contains a polymer **152,** which is a polymerized form of a photopolymerizable compound. The first and second alignment sustaining layers **130** and **150** maintain the alignment of the liquid crystal molecules **162,** such that the alignment directions of the liquid crystal molecules **162** are defined at least by the first and second alignment sustaining layers **130** and **150.** Although FIG. **1(b)** illustrates the first and second alignment sustaining layers **130** and **150** to be films covering the entire first and second alignment films **128** and **148,** the first and second alignment sustaining layers **130** and **150** do not need to be provided so as to cover the entire first and second alignment films **128** and **148,** but may be provided in island shapes. The polymers **132** and **152** of the first and second alignment sustaining layers **130** and **150** are formed by, after allowing a liquid crystal material having a photopolymerizable compound mixed therein to be applied in between the first alignment film **128** of the active matrix substrate **120** and the second alignment film **148** of the counter substrate **140,** irradiating the photopolymerizable compound with light. In the following description, the step of forming the alignment sustaining layers **130** and **150** through such light irradiation will also be referred to as a photopolymerization step.

Before performing the photopolymerization step, the first and second alignment films **128** and **148** are subjected to a photo-alignment treatment, so that the liquid crystal molecules **162** are tilted from the normal directions of the principal faces of the first and second alignment films **128** and **148,** thus making it unnecessary to apply a voltage in the photopolymerization step. Therefore, it would be possible to form the polymers **132** and **152** of the first and second alignment sustaining layers **130** and **150** by using a relatively inexpensive light irradiation apparatus. Moreover, even in the case where the liquid crystal material is added through dropwise application, it is possible to utilize a commonly-used fabrication apparatus, with no need to design complex additional wiring lines. Moreover, since the first and second alignment films **128** and **148** have been subjected to a photo-alignment treatment and there is no need to provide slits, ribs, or rivets in the pixel electrode **126** and the counter electrode **146,** the effective aperture ratio can be increased. Moreover, the step of providing ribs or rivets on the pixel electrode **126** and the counter electrode **146** can be omitted, thus making it possible to reduce cost.

Note that, in the case where the alignment sustaining layers **130** and **150** are omitted, impurity ions may occur from the impurities that are generated due to the damage upon light irradiation for forming the photo-alignment films, etc., thus degrading the voltage holding ratio. Moreover, an image sticking may occur when the alignment sustaining layers **130** and **150** are omitted.

Now, image sticking will be described. It is a known phenomenon that, when a liquid crystal display device keeps displaying the same pattern for a long time, that pattern may stick. An image sticking is conspicuously observed when conducting an aging test. In an aging test, for example, a central portion (window) of the display screen may be designated as region 1 and its surrounding portion as region 2, and after displaying white in region 1 and black in region 2 for a long time, the entire panel is caused to display a uniform intermediate tone (gray color), of which displaying is to be checked. For example, when an image sticking occurs in a liquid crystal display device of the normally black mode (black is displayed in the absence of an applied voltage), region 1 will appear brighter than region 2. Conventionally, the cause for this has mainly been considered as the impurity ions in the liquid crystal layer being attracted to region 1, where voltage is being applied, and stored on the alignment film surface, thus allowing a DC component to occur in region 1. When a DC component occurs in this manner, the optimum counter voltage would differ between region 1 and region 2. This can be confirmed from the phenomenon in which, as the potential of the counter electrode is varied from a state where an image sticking is being observed, the image sticking once becomes less visible but will again become conspicuous. This image sticking is referred to as a "DC image sticking". Conventionally, measures have been taken to prevent a DC image sticking, e.g., reducing the amount of impurity ions in the liquid crystal layer, using an alignment film material which is unlikely to adsorb impurity ions, finding a combination of such a liquid crystal material and such an alignment film material, and adjusting the counter voltage so that the image sticking will be less visible.

However, in a liquid crystal display device having the aforementioned photo-alignment films, a phenomenon may occur such that, when the same pattern keeps being displayed for a long time, that pattern may stick. This image sticking, which is not ascribable to a DC component, may sometimes be referred to as an "AC image sticking".

It is presumable that an AC image sticking occurs in the following manner: when a voltage keeps being applied across a liquid crystal layer, the pretilt angle of the liquid crystal molecules restricted (anchored) by the alignment film decreases with lapse of time, thus causing a shift in the threshold voltage of the V-T curve toward the lower voltage side. For example, when the central portion (window) of the display screen is designated as region 1 and its surrounding portion as region 2, if an aging test is conducted while region 1 displays white and region 2 displays black, the pretilt angle of the liquid crystal molecules in region 1 (where the voltage is applied for a long time) will decrease, whereas the pretilt angle of the liquid crystal molecules in region 2 (where no voltage is applied) will not change. In this case, if the entire panel is caused to display a uniform gray scale tone, region 1 will appear brighter than region 2. As indicated by the fact that the appearance of the image sticking does not change even if the potential of the counter electrode is varied, this image sticking is not a DC image sticking. This phenomenon is conspicuous in the case where a VA-mode liquid crystal display device is used to perform display in the normally black mode, but will presumably occur in other modes as well.

In the liquid crystal display device **100** of the present embodiment, the first and second alignment sustaining layers **130** and **150** are provided, whereby impurities and the like which have occurred due to damage upon light irradiation are stabilized so as to suppress occurrence of impurity ions, and the pretilt direction of the liquid crystal molecules **162** is fixed, thus suppressing occurrence of an image sticking.

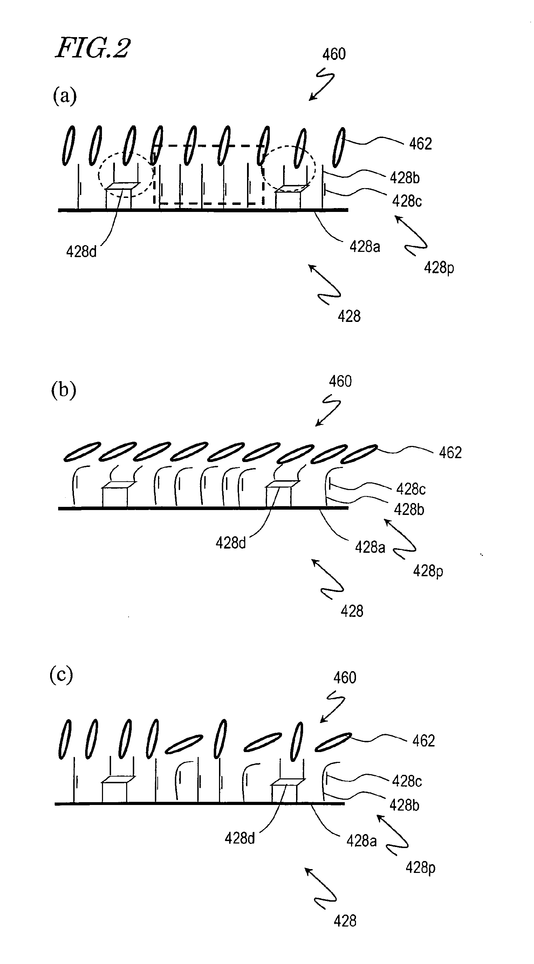

Now, the reason why an AC image sticking is suppressed by formation of a polymer will be described. First, with reference to FIG. **2****,** alignment states of liquid crystal molecules in a liquid crystal display device of Comparative Example will be described. The liquid crystal display device of Comparative Example includes photo-alignment films, and the liquid crystal molecules are aligned so as to be slightly tilted from the normal direction of a principal face of the alignment film before voltage application. However, no alignment sustaining layer that contains a polymer is provided.

FIG. **2(a)** shows an alignment state of liquid crystal molecules **462** near an alignment film **428** before voltage application; FIG. **2(b)** shows an alignment state of the liquid crystal molecules **462** near the alignment film **428** during voltage application; and FIG. **2(c)** shows an alignment state of the liquid crystal molecules **462** near the alignment film **428** after voltage application. The alignment film **428** contains a polymer **428p** which includes a main chain **428a** and side chains **428b,** the side chains **428b** having photoreactive functional groups **428c.**

As shown in FIG. **2(a)****,** before a voltage is applied across the liquid crystal layer **460,** the liquid crystal molecules **462** are aligned essentially vertically, although slightly tilted from the normal direction of the principal face of the alignment film **428;** as a result, most of the side chains **428b** extend in an essentially vertical direction from the main chain **428a,** in parallel to the alignment direction of the liquid crystal molecules **462.** Some of the side chains **428b** share dimerization sites **428d** which are created through dimerization of the photoreactive functional groups **428c.** Such dimerization sites **428d** define a pretilt direction, which is expressed in terms of a pretilt azimuth and a pretilt angle.

As shown in FIG. **2(b)****,** when an AC voltage is applied across the liquid crystal layer **460,** the liquid crystal molecules **462** receive a force which causes them to be tilted in accordance with the electric field. The force with which the liquid crystal molecules **462** are tilted propagates to the side chains **428b,** so that the side chains **428b** also tilt in accordance with the tilt of the liquid crystal molecules **462.** Note that the applied voltage herein is an AC voltage, whereby occurrence of a DC image sticking is being suppressed.

As shown in FIG. **2(c)****,** when the AC voltage is turned off, the liquid crystal molecules **462** try to resume their original positions, whereby the tilted side chains **428b** also try to resume their original positions. Thus, a force of restoration (restoration force) is applied to the side chains **428b.** However, since the side chains **428b** were tilted together with the liquid crystal molecules **462** under an applied voltage as shown in FIG. **2(b)****,** even if the voltage is turned off, some of the side chains **428b** are not completely restored. Since the alignment directions of the liquid crystal molecules **462** are affected not only by the electric field but also by the side chains **428b,** the pretilt angle of the liquid crystal molecules **462** becomes small, as will be understood from the comparison between FIG. **2(a)** and FIG. **2(c)****.** Thus, the pretilt angle is reduced with voltage application time, whereby an AC image sticking occurs.

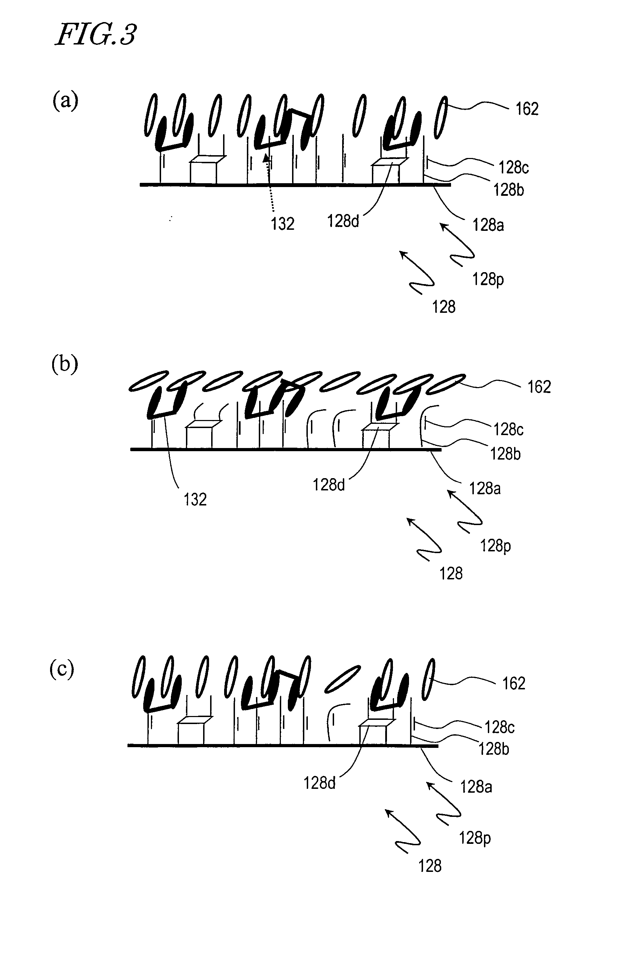

Next, with reference to FIG. **3****,** the alignment states of the liquid crystal molecules **162** in the liquid crystal display device **100** of the present embodiment are described. FIG. **3(a)** shows alignment states of the liquid crystal molecules **162** near the alignment film **128** before voltage application; FIG. **3(b)** shows alignment states of the liquid crystal molecules **162** near the alignment film **128** during voltage application; and FIG. **3(c)** shows alignment states of the liquid crystal molecules **162** near the alignment film **128** after voltage application. FIG. **3** is illustrated in correspondence with FIG. **2****.** Although the first alignment film **128** and its neighborhood are described herein, the second alignment film **148** and its neighborhood are also the same. The first alignment film **128** contains a polymer **128p** which includes a main chain **128a** and side chains **128b,** the side chains **128b** having photoreactive functional groups **128c.**

As shown in FIG. **3(a)****,** before voltage application, most of the side chains **128b** extend in the vertical direction from the main chain **128a.** Moreover, some of the side chains **128b** share dimerization sites **128d** which are created through dimerization of the photoreactive functional groups **128c.** However, as will be understood from a comparison with FIG. **2(a)****,** the polymer **132** of the alignment sustaining layer **130** is formed so as to be entangled with the side chains **128b.**

As shown in FIG. **3(b)****,** when an AC voltage is applied, the liquid crystal molecules **162** are tilted in accordance with the electric field. At this time, together with the liquid crystal molecules **162,** the side chains **128b** receive a force which causes them to be tilted, but at least some of the side chains **128b** are held by the polymer **132** so as not to be tilted.

As shown in FIG. **3(c)****,** when the AC voltage is turned off, the liquid crystal molecules **162** try to resume their original positions, and the side chains **128b** try to resume their original positions with the movement of the liquid crystal molecules **162.** At this time, as shown in FIG. **3(b)****,** since the side chains **128b** were held by the polymer **132** so as not to be tilted under an applied voltage, most of the side chains **128b** resume their original positions, as will be understood from a comparison with FIG. **2(c)****.** Thus, since the polymer **132** exists in a manner of tangling with the side chains **128b,** the force that propagates to the side chains **128b** from the liquid crystal molecules **162** is weakened without disturbing the alignment states of the liquid crystal molecules **162,** and the side chains **128b** will be easily restored after voltage application, such that the pretilt angle of the liquid crystal molecules **162** is hardly changed before or after voltage application. Therefore, AC image sticking can be suppressed.

In the liquid crystal display device **100** of the present embodiment, since the first alignment sustaining layer **130** containing the polymer **132** is provided between the liquid crystal layer **160** and the first alignment film **128,** the force of the liquid crystal molecules **162** tilting with the electric field is made less likely to propagate to the side chains **128b,** without changing the alignment state of the liquid crystal molecules **162.** Moreover, because of the polymer **132** as such, even if the force of the tilting liquid crystal molecules **162** does propagate to the side chains **128b,** the force propagating to the side chains **128b** will be little, so that the liquid crystal molecules **162** will easily resume their original positions after voltage application. Consequently, fluctuations of the pretilt angle of the liquid crystal molecules **162** are suppressed by the first alignment sustaining layer **130.** Similarly, since the second alignment sustaining layer **150** containing the polymer **152** is provided between the liquid crystal layer **160** and the second alignment film **148,** fluctuations of the pretilt angle of the liquid crystal molecules **162** are suppressed. In this manner, alleviation of the AC image sticking is realized.

Moreover, when light is radiated for polymerizing the photopolymerizable compound, impurities may occur from the first and second alignment films **128** and **148.** In the liquid crystal display device **100** of the present embodiment, impurities are stabilized because the first and second alignment sustaining layers **130** and **150** are provided, whereby a decrease in the voltage holding ratio can be suppressed.

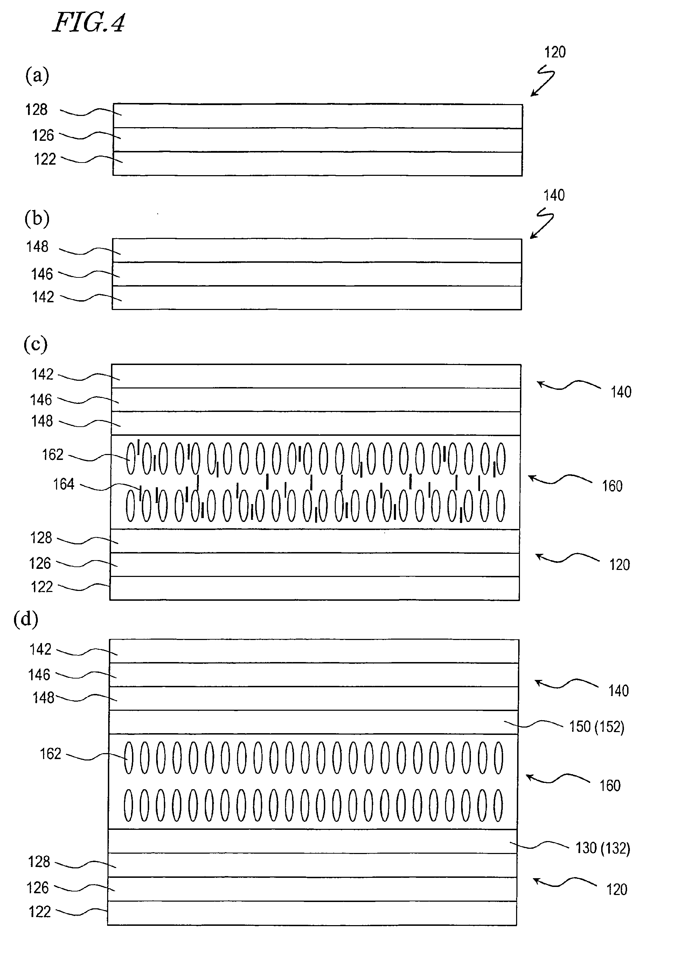

Hereinafter, with reference to FIG. **4****,** a production method for the liquid crystal display device **100** will be described.

First, as shown in FIG. **4(a)****,** an active matrix substrate **120,** having the pixel electrode **126** and the first alignment film **128** provided on the transparent substrate **122,** is provided. Although not shown in FIG. **4(a)** thin film transistors (Thin Film Transistors: TFTs) and wiring lines and the like that are connected to the TFTs are provided between the transparent substrate **122** and the pixel electrode **126.**

The first alignment film **128** is formed by applying an alignment film material having a polyamic acid (PAA) type main chain and a side chain containing the aforementioned cinnamate group, and performing a heat treatment. The structural formula of the main chain of the polymer in the alignment film material is expressed as follows.

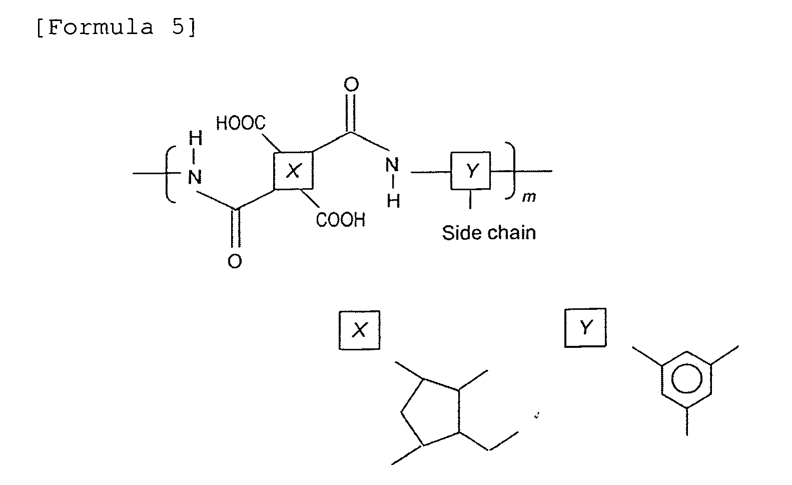

Alternatively, the structural formula of the main chain of the polymer in the alignment film material may be as expressed below.

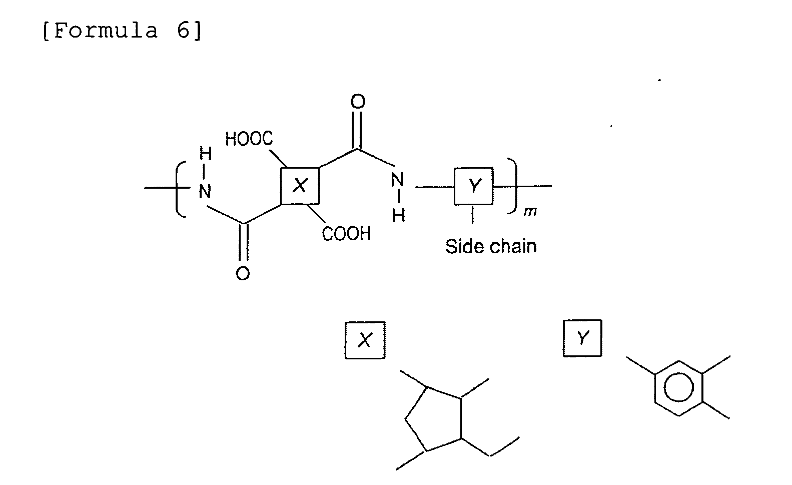

Note that the polymers represented by the different structural formulae above may be mixed such that one is present in at least a small amount.

Through the heat treatment, the main chain of the polyamic acid type is altered into the main chain of the polyimide type described above.

Next, the first alignment film **128** is subjected to a photo-alignment treatment. For example, light in a range from wavelengths of no less than 250 nm and no more than 400 nm is radiated onto the first alignment film **128** at an irradiation dose of no less than 20 mJ/cm² and no more than 200 mJ/cm², from a direction which is tilted from the normal direction of the principal face of the first alignment film **128.** If the irradiation dose is greater than 200 mJ/cm², the alignment film will be deteriorated and the problem of reliability degradation will be conspicuous. As the irradiation angle with respect to the normal direction of the principal face of the first alignment film **128** becomes smaller, the tilt of the liquid crystal molecules **162** from the normal direction of the principal face of the first alignment film **128** will become smaller; and as the irradiation angle becomes larger, the irradiation amount relative to the irradiation time (irradiation amount efficiency) will become lower. The irradiation angle is preferably in the range of no less than 5° and no more than 85°, and further preferably in the range of no less than 40° and no more than 60°. Moreover, the light may be unpolarized light, or linearly polarized light, elliptically polarized light, or circularly polarized light. In the case where the polymer of the alignment film contains a cinnamate group, it is preferable that the light is linearly polarized light. In the case of a photolysis type alignment film, the light may be unpolarized light or circularly polarized light.

Moreover, as shown in FIG. **4(b)****,** the counter substrate **140,** having the counter electrode **146** and the second alignment film **148** provided on the transparent substrate **142,** is provided. Next, the second alignment film **148** is subjected to a photo-alignment treatment, similarly to the first alignment film **128.**

Next, as shown in FIG. **4(c)****,** the active matrix substrate **120** and the counter substrate **140** are placed so that the first alignment film **128** and the second alignment film **148** oppose each other. In the present specification, before formation of the liquid crystal layer, the active matrix substrate and the counter substrate held in place will be referred to as a "vacant panel".

Next, a liquid crystal material in which the photopolymerizable compound **164** is mixed is prepared. For example, the photopolymerizable compound **164** is a photopolymerizable monomer, a photopolymerizable oligomer, or a mixture thereof. As the photopolymerizable monomer, a vinyl monomer that is 2-substituted or more, which is easy to polymerize, is used. Specifically, it is preferable to use diacrylate, dimethacrylate, diacrylamide, or dimethacrylamide as the photopolymerizable monomer. In particular, when using a diacrylate or dimethacrylate monomer, containing a molecule exhibiting mesomorphism in their side chains, the alignment of the liquid crystal molecules **162** can be maintained more stably. Moreover, the structure between any two polymerizable sites may be better a molecular structure which is compatible with liquid crystal, e.g., a biphenyl group. For example, the concentration of the photopolymerizable monomer **164** with respect to the liquid crystal material is an about 0.3wt% concentration.

Next, a liquid crystal material to which the photopolymerizable compound **164** is mixed is introduced between the first alignment film **128** and the second alignment film **148** of the vacant panel, thus forming the liquid crystal layer **160.** As described above, the first and second alignment films **128** and **148** have been subjected to a photo-alignment treatment, so that the liquid crystal molecules **162** are aligned with a tilt from the normal directions of the principal faces of the first and second alignment films **128** and **148** even in the absence of an applied voltage.

Thereafter, light is radiated. At the time of light irradiation, no voltage is applied between the pixel electrode **126** and the counter electrode **146.** With the light irradiation, as shown in FIG. **4(d)****,** the photopolymerizable compound **164** in the liquid crystal layer **160** is polymerized to form the polymers **132** and **152,** and becomes phase-separated from the liquid crystal layer **160,** whereby the first and second alignment sustaining layers **130** and **150** having the polymers **132** and **152** are formed between the liquid crystal layer **160** and the first and second alignment films **128** and **148.**

For example, in this photopolymerization, a light source which mainly emits ultraviolet light of a wavelength of 365 nm (i-line) is suitably used. The irradiation time is about 500 seconds, for example, and the irradiation intensity of ultraviolet light from the light source is about 20 mW/cm². In the case where polymerization is effected through light irradiation, the photopolymerizable compound will sufficiently polymerize even if the intensity of light irradiation is 10 mW/cm² or less. The light wavelength is preferably in the range of no less than 250 nm and no more than 400 nm, and more preferably in the range of no less than 300 nm and no more than 400 nm. However, polymerization will sufficiently occur even with light of a wavelength greater than 400 nm. Although polymerization can also occur with light of a wavelength of 300 nm or less, the irradiation amount should preferably be as small as possible because decomposition of organic matter will occur with irradiation of deep-ultraviolet in the vicinity of the wavelength of 200 nm.

When light for polymerization is radiated from both faces, i.e., the active matrix substrate **120** side and the counter substrate **140** side, of the liquid crystal panel **110,** the polymers **132** and **152** will adhere in large amounts to the surfaces of the alignment films **128** and **148,** thus reducing the photopolymerizable compound **164** remaining in the liquid crystal layer **160.** This reduces the haze when a voltage is applied across the liquid crystal layer **160,** thus improving the contrast ratio. It will be appreciated that the photopolymerizable compound will also sufficiently polymerize with irradiation from only one face.

Because of the first and second alignment sustaining layers **130** and **150,** the alignment directions of the liquid crystal molecules **162** are maintained, whereby AC image sticking is suppressed. Note that the photopolymerizable compound **164** may remain in the liquid crystal layer **160** even after performing a photopolymerization step. In this case, further light irradiation may be performed after the photopolymerization step to lower the concentration of the photopolymerizable compound **164** within the liquid crystal layer **160.** Such light irradiation for lowering the concentration of the photopolymerizable compound **164** in the liquid crystal layer **160** is also referred to as secondary irradiation. Even if secondary irradiation is performed, the pretilt angle of the liquid crystal molecules will be hardly changed. In this manner, the liquid crystal panel **110** is formed. Thereafter, the driving circuit **112** and the control circuit **114** shown in FIG. **1(a)** are mounted on the liquid crystal panel **110,** thus producing the liquid crystal display device **100.**

In order to perform the PSA technique disclosed in Patent Documents 3 and 4 mentioned above, in the case of radiating light while applying a voltage, a complex fabrication apparatus is required which includes a device for applying a voltage across the liquid crystal panel and a device for radiating light. Moreover, since light is radiated after applying a voltage across the liquid crystal panel for a long time in order to obtain a predetermined alignment, this fabrication apparatus needs to be used for a long time. Moreover, in the case of producing a liquid crystal layer of a liquid crystal panel through dropwise application of a liquid crystal material, generally speaking, a plurality of liquid crystal panels are concurrently produced by using a large-sized mother glass substrate, and thereafter the large-sized mother glass substrate is cut to take out each liquid crystal panel. When concurrently producing a plurality of liquid crystal panels in this manner, a design must be adopted such that special wiring lines are formed on the mother glass substrate for allowing a voltage to be simultaneously applied to the plurality of liquid crystal panels.

Moreover, in the case where a liquid crystal panel of a particular large size is to be produced, it is difficult to uniformly apply a voltage across the liquid crystal layer in the respective pixels. If light irradiation is performed with non-uniform voltages being applied, there will be fluctuations in the pretilt angle of the liquid crystal molecules.

Moreover, in the case of applying a voltage under the PSA technique, ribs, slits, or rivets need to be provided on the pixel electrode and the counter electrode for improved viewing angle characteristics. This will result in an increased number of steps and a decrease in the effective aperture ratio.

However, in the production method of the present embodiment, no voltage is applied in the photopolymerization step. Therefore, the liquid crystal display device 100 can be easily produced without using a complex fabrication apparatus. Moreover, a liquid crystal panel can be easily produced even when producing a liquid crystal layer through dropwise application of a liquid crystal material. Moreover, since it is not necessary to apply a voltage across the liquid crystal layer of all pixels in the photopolymerization step, fluctuations in the pretilt angle among liquid crystal molecules can be suppressed. Furthermore, the viewing angle can be improved without providing ribs, slits, or rivets on the pixel electrode **126** and the counter electrode **146,** thus allowing for an improved design freedom.

Note that slits, ribs, and/or rivets may be provided on the pixel electrode **126** and the counter electrode **146.** Alternatively, slits, ribs, and/or rivets may not be provided on the pixel electrode **126** and the counter electrode **146,** and the liquid crystal molecules may be aligned in accordance with an oblique electric field which is created by a pixel electrode **126** of a highly symmetrical shape and the counter electrode **146.** As a result, the alignment regulating force of the liquid crystal molecules under an applied voltage can be further increased.

Note that those skilled in the art would not think of, after a photo-alignment treatment is performed to align the liquid crystal molecules **162** so as to be tilted from the normal directions of the principal faces of the first and second alignment films **128** and **148,** performing light irradiation for polymer formation. The reason is that, since light is radiated from a specific direction in the photo-alignment treatment so as to allow the liquid crystal molecules **162** to be aligned with a tilt from the normal directions of the principal faces, it would be natural to believe that the photo-alignment treatment which has been performed for the first and second photo-alignment films **128** and **148** will be wasted if the first and second alignment films **128** and **148** thus formed are irradiated with light of a high intensity. However, in the present embodiment, as described above, light irradiation for polymer formation is performed after the first and second alignment films **128** and **148** are formed through a photo-alignment treatment. Even if a photopolymerization step is thus performed after the photo-alignment treatment, the function of the first and second photo-alignment films **128** and **148** to provide alignment regulating forces for the liquid crystal molecules will not be lost, and the alignment regulating force will be hardly affected. One reason why the function of the first and second photo-alignment films **128** and **148** is maintained even by radiating light for polymerizing the photopolymerizable compound is that this light has a peak wavelength which is different from the peak wavelength of the photoreactive functional group. For example, the peak wavelength of light at the time of polymerization is 360 nm, whereas the absorption peak wavelength of a cinnamate group is 280 nm. Note that, strictly speaking, the lower portion of the absorption spectrum of a cinnamate group have slight overlaps with the light wavelength, and therefore, if ultraviolet light irradiation is performed for a very long time without mixing a photopolymerizable compound in the liquid crystal material, there is a possibility that the alignment regulating forces of the first and second photo-alignment films **128** and **148** for the liquid crystal molecules may be lost. However, light irradiation is performed after producing the liquid crystal panel **100.** For example, in order for light entering at the active matrix substrate **120** side to reach the alignment film **128 (148),** it must pass through the first transparent substrate **122,** the pixel electrode **126** (and furthermore the first alignment film **128** and the liquid crystal layer **160),** but the alignment of the liquid crystal molecules **162** of the first and second photo-alignment films **128** and **148** are maintained presumably because of a low light absorption efficiency of the cinnamate group.

The photopolymerizable compound may have at least one ring structure or condensed ring structure and at least one polymerizable functional group chemically bonded to the ring system or condensed ring system. The chemically bond is an ester bond or an amide bond, for example. For example, the polymerizable monomer is represented by the general formula P1-A1-(Z1-A2)n-P2 (where P1 and P2 are, independently, acrylate, methacrylate, acrylamide, methacrylamide, vinyl, vinyloxy, or an epoxy group; A1 and A2 represent, independently, 1,4-phenylene or naphthalene -2,6-diyl group; Z1 is a -COO- or -OCO- group or a single bond; and n is 0, 1, or 2). In this case, it is preferable that P1 and P2 are acrylate groups; Z1 is a single bond; and n is 0 or 1. Alternatively, it is preferable that P1 and P2 are methacrylate groups; Z1 is a single bond; and n is 0 or 1. Alternatively, it is preferable that P1 and P2 are acrylamide groups; Z1 is a single bond; and n is 0 or 1. Alternatively, P1 and P2 are methacrylamide groups; Z1 is a single bond; and n is 0 or 1.

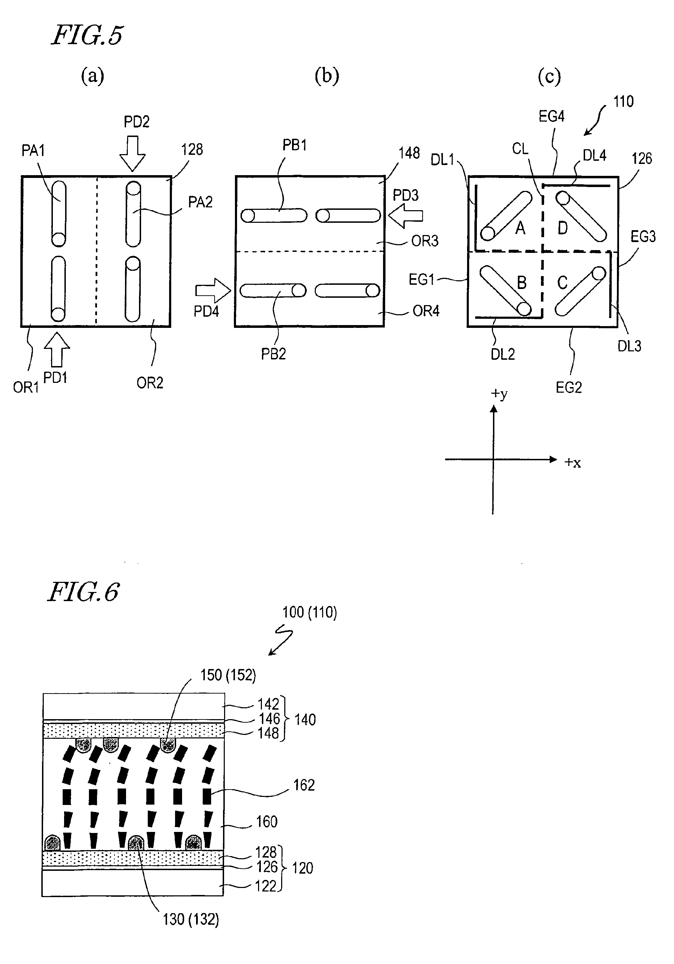

Moreover, the liquid crystal display device **100** may be of the 4D-RTN (4 Domain-Reverse Twisted Nematic) mode. Hereinafter, a liquid crystal display device of the 4D-RTN mode will be described with reference to FIG. **5****.**

FIG. **5(a)** shows pretilt directions **PA1** and **PA2** of liquid crystal molecules defined on the alignment film **128** of the active matrix substrate **120,** and FIG. **5(b)** shows pretilt directions **PB1** and **PB2** of liquid crystal molecules defined on the alignment film **148** of the counter substrate **140.** FIG. **5(c)** shows alignment directions of liquid crystal molecules in the centers of liquid crystal domains **A** to **D** under an applied voltage, and regions (domain lines) **DL1** to **DL4** appearing dark due to alignment disorder. Note that the domain lines **DL1** to **DL4** are not so-called disclination lines.

FIG. **5(a)** to FIG. **5(c)** schematically show alignment directions of liquid crystal molecules as seen from the viewer side, indicative that the end portions (essentially circular portions) of the cylindrical liquid crystal molecules are tilted toward the viewer side.

As shown in FIG. **5(a)****,** the first alignment film **128** includes a first alignment region **OR1** and a second alignment region **OR2.** The liquid crystal molecules regulated by the first alignment region **OR1** are tilted in the -y direction from the normal direction of the principal face of the first alignment film **128,** whereas the liquid crystal molecules regulated by the second alignment region **OR2** of the first alignment film **128** are tilted in the +y direction from the normal direction of the principal face of the first alignment film **128.** Moreover, the boundary between the first alignment region **OR1** and the second alignment region **OR2** extends in the column direction (y direction), and located in the substantial center along the row direction (x direction) of pixels. Thus, first and second alignment regions **OR1** and **OR2** of different pretilt azimuths are provided on the first alignment film **128.**

Moreover, as shown in FIG. **5(b)****,** the second alignment film **148** includes a third alignment region **OR3** and a fourth alignment region **OR4.** The liquid crystal molecules regulated by the third alignment region **OR3** are tilted in the +x direction from the normal direction of the principal face of the second alignment film **148,** such that the -x direction end portions of these liquid crystal molecules are pointed toward the front face. The liquid crystal molecules regulated by the fourth alignment region **OR4** of the second alignment film **148** are tilted in the -x direction from the normal direction of the principal face of the second alignment film **148,** such that the +x direction end portions of these liquid crystal molecules are pointed toward the front face. Thus, the second alignment film **148** includes third and fourth alignment regions **OR3** and **OR4** with different pretilt azimuths.

An alignment treatment direction corresponds to an azimuth angle component obtained by projecting a direction, which extends toward an alignment region along the major axes of the liquid crystal molecules, onto that alignment region. The alignment treatment directions of the first, second, third, and fourth alignment regions are also referred to as first, second, third, and fourth alignment treatment directions.

The first alignment region **OR1** of the first alignment film **128** has been subjected to an alignment treatment along a first alignment treatment direction **PD1,** whereas the second alignment region **OR2** has been subjected to an alignment treatment along a second alignment treatment direction **PD2** which is different from the first alignment treatment direction **PD1.** The first alignment treatment direction **PD1** is essentially antiparallel to the second alignment treatment direction **PD2.** Moreover, the third alignment region **OR3** of the second alignment film **148** has been subjected to an alignment treatment along a third alignment treatment direction **PD3,** whereas the fourth alignment region **OR4** has been subjected to an alignment treatment along a fourth alignment treatment direction **PD4** which is different from the third alignment treatment direction **PD3.** The third alignment treatment direction **PD3** is essentially antiparallel to the fourth alignment treatment direction **PD4.**

As shown in FIG. **5(c)****,** four liquid crystal domains **A, B, C,** and **D** are formed in the liquid crystal layer of a pixel. In the liquid crystal layer **160,** a portion interposed between the first alignment region **OR1** of the first alignment film **128** and the third alignment region **OR3** of the second alignment film **148** defines the liquid crystal domain **A;** a portion interposed between the second alignment region **OR2** of the first alignment film **128** and the fourth alignment region **OR4** of the second alignment film **148** defines a liquid crystal domain **B;** a portion interposed between the second alignment region **OR2** of the first alignment film **128** and the fourth alignment region **OR4** of the second alignment film **148** defines a liquid crystal domain **C;** and a portion interposed between the first alignment region **OR1** of the first alignment film **128** and the third alignment region **OR3** of the second alignment film **148** defines a liquid crystal domain **D.** Note that the angle constituted by the first or second alignment treatment direction **PD1** or **PD2** and the third or fourth alignment treatment direction **PD3** or **PD4** is essentially 90°, and the twist angle in each liquid crystal domain is essentially 90°.

The alignment direction of a liquid crystal molecule at the center of a liquid crystal domain **A** to **D** is an intermediate direction between the pretilt direction for liquid crystal molecules introduced by the first alignment film **128** and the pretilt direction for liquid crystal molecules introduced by the second alignment film **148.** In the present specification, the alignment direction of a liquid crystal molecule in the center of a liquid crystal domain is referred to as a reference alignment direction; and within the reference alignment direction, an azimuth angle component in a direction from the rear face toward the front face and along the major axis of the liquid crystal molecule (i.e., an azimuth angle component obtained by projecting the reference alignment direction onto the principal face of the first alignment film **128** or the second alignment film **148)** is referred to as a reference alignment azimuth. The reference alignment azimuth characterizes its corresponding liquid crystal domain, and exerts a predominant influence on the viewing angle characteristics of that liquid crystal domain. Now, by relying on the horizontal direction (right-left direction) of the display screen (plane of the figure) as a reference for the azimuth angle direction, and defining the left turn as positive (i.e., if the display surface is compared to the face of a clock, counterclockwise is positive, the 3 o'clock direction being an azimuth angle of 0°), the reference alignment directions of the four liquid crystal domains **A** to **D** are set to be four directions such that the difference between any two directions is substantially equal to an integer multiple of 90°. Specifically, the reference alignment azimuths of the liquid crystal domains **A, B, C**, and **D** are, respectively, 225°, 315°, 45°, and 135°.

As shown in FIG. 5(c), the domain lines **DL1** to **DL4** are respectively formed in the liquid crystal domains **A, B, C,** and **D**. The domain line **DL1** is formed in parallel to a portion of an edge **EG1** of the pixel electrode **126,** whereas the domain line **DL2** is formed in parallel to a portion of an edge **EG2.** Moreover, the domain line **DL3** is formed in parallel to a portion of an edge **EG3** of the pixel electrode **126,** whereas the domain line **DL4** is formed in parallel to a portion of an edge **EG4.** Moreover, a disclination line **CL** indicated by a broken line is observed in a border region where each of the liquid crystal domains **A** to **D** adjoins another liquid crystal domain. The disclination lines **CL** are dark lines in the aforementioned central portion. The disclination lines **CL** and the domain lines **DL1** to **DL4** are continuous, thus resulting in dark lines of a reverse swastika shape. Although the dark lines herein are in a reverse swastika shape, the dark lines may be in an 8 shape.

Although the above-described liquid crystal display device is of the 4D-RTN mode, the present invention is not limited thereto. The liquid crystal display device may be of the CPA mode.

Although alignment films are provided on both of the active matrix substrate and the counter substrate in the above description, the present invention is not limited thereto. An alignment film may be provided only on one of the active matrix substrate and the counter substrate.

### [Example 1]

FIG. **6** shows a schematic diagram of a portion of a cross section of the liquid crystal panel **110** of the liquid crystal display device **100** of Example 1. The liquid crystal display device **100** of Example 1 is of the RTN mode.

First, a vacant panel in which to inject a liquid crystal material was produced. The pixel electrode **126** was formed on the first transparent substrate **122,** and the first alignment film **128** was formed on the pixel electrode **126.** Moreover, the counter electrode **146** was formed on the second transparent substrate **142,** and the second alignment film **148** was formed on the counter electrode **146.** The first alignment film **128** and the second alignment film **148** contained a polymer including a polyimide type main chain and a side chain having a cinnamate group.

Next, obliquely from a 40° direction with respect to the normal direction of the principal face of each of the first alignment film **128** and the second alignment film **148,** P-polarized light with a peak wavelength of 330 nm was radiated at 50 mJ/cm², thus performing a photo-alignment treatment. Next, the active matrix substrate **120** and the counter substrate **140** were disposed so that the first alignment film **128** and the second alignment film **148** opposed each other and that the angle between the alignment treatment direction of the first alignment film **128** and the alignment treatment direction of the second alignment film **148** was 90°, and fixed so that the interspace between the active matrix substrate **120** and the counter substrate **140** was about 4 µm.

Next, a liquid crystal material was provided. The liquid crystal material was a nematic liquid crystal material having a negative dielectric anisotropy, with a birefringence Δn of 0.085 and a dielectric anisotropy Δε of -1.3. To this liquid crystal material, biphenyl diacrylate was mixed as a photopolymerizable compound for forming a polymer, such that the concentration of biphenyl diacrylate with respect to the liquid crystal material was 0.3wt%. Note that, since the active matrix substrate **120** and the counter substrate **140** were disposed in this manner, the liquid crystal molecules **162** had a twist angle of 90°.

Next, this mixture was sealed in the vacant panel to form the liquid crystal layer **160,** and the liquid crystal layer **160** was irradiated with ultraviolet light. Upon observing portions of the surfaces of the first and second alignment films **128** and **148,** polymers **132** and **152** were confirmed.

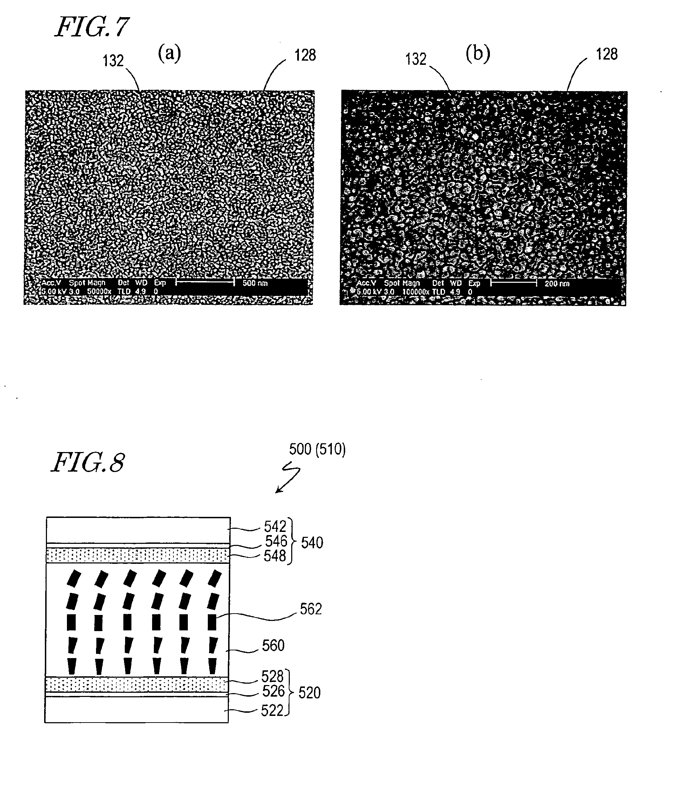

FIG. **7(a)** is a 50000 times enlarged plan view of the surface of the first alignment film **128,** and FIG. **7(b)** is a 100000 times enlarged plan view of the surface of the first alignment film **128.** The white particulate masses shown in FIGS. **7(a)** and **(b)** are the polymer **132.** The interspace between two adjoining pieces of polymer **132** was about 1 µm or less. Similarly, polymer **152** was confirmed in portions of the surface of the second alignment film **148.**

Next, a polarizer (not shown) was attached to each of the active matrix substrate **120** and the counter substrate **140.** The liquid crystal panel **110** thus produced had an initial pretilt angle of 89.1°, and its voltage holding ratio at an ambient temperature of 70°C was 99.5% or more.

Next, the liquid crystal panel **110** having been produced was subjected to a power-on test where a voltage of 8 V was continuously applied for 50 hours at room temperature, but there was no change in the pretilt angle of the liquid crystal molecules before or after the power-on test. Moreover, the voltage holding ratio after finishing the power-on test was 99.5% or more, which confirmed that the voltage application had been conducted appropriately.

Presumably, the use of a diacrylate type monomer as the monomer allowed a polymer whose degree of polymerization was relatively small (about 10 or less) to be easily formed, so that the polymer became phase-separated from the liquid crystal layer to arrive between side chains, thus suppressing changes in the tilt of the side chains. Also presumably, since the main chain was a polyimide type and the main chain of the polymer was a polyvinyl type, the polymer did not enter into the alignment films because of a low compatibility between the polyimide type and the polyvinyl type.

Note that the photopolymerizable compound is not limited to the diacrylate type illustrated herein; similar effects of suppressing changes in the pretilt angle were also obtained with a dimethacrylate type.

### [Example 2]

In Example 2, a diacrylamide type monomer was used as the photopolymerizable compound.

First, a vacant panel was produced. The method of producing the vacant panel was similar to that of Example 1. The pixel electrode **126** was formed on the first transparent substrate **122,** and the first alignment film **128** was formed on the pixel electrode **126.** Moreover, the counter electrode **146** was formed on the second transparent substrate **142,** and the second alignment film **148** was formed on the counter electrode **146.** The first alignment film **128** and the second alignment film **148** contained a polymer including a polyimide type main chain and a side chain having a cinnamate group.

Next, obliquely from a 40° direction with respect to the normal direction of the principal face of each of the first alignment film **128** and the second alignment film **148,** P-polarized light with a peak wavelength of 330 nm was radiated at 50 mJ/cm², thus performing a photo-alignment treatment. Next, the active matrix substrate **120** and the counter substrate **140** were disposed so that the first alignment film **128** and the second alignment film **148** opposed each other and that the angle between the alignment treatment direction of the first alignment film **128** and the alignment treatment direction of the second alignment film **148** was 90°, and fixed so that the interspace between the active matrix substrate 120 and the counter substrate **140** was about 4 µm.

Next, a liquid crystal material was provided. The liquid crystal material was a nematic liquid crystal material having a negative dielectric anisotropy, with a birefringence Δn of 0.085 and a dielectric anisotropy Δ ε of -1.3. Furthermore, to this liquid crystal material, biphenyl diacrylamide was mixed as the photopolymerizable compound **164** for forming a polymer, such that the concentration of biphenyl diacrylamide with respect to the liquid crystal material was 0.3wt%.

Next, this mixture was sealed in the vacant panel, and the liquid crystal layer was irradiated with ultraviolet light. As a result, as has been described above with reference to FIG. **7****,** polymers **132** and **152** were formed in portions of the surfaces of the first and second alignment films **128** and **148.**

Next, a polarizer (not shown) was attached to each of the active matrix substrate **120** and the counter substrate **140.** The liquid crystal panel **110** thus produced had an initial pretilt angle of 89.3°, and its voltage holding ratio at an ambient temperature of 70°C was 99.5% or more.

Next, the liquid crystal panel **110** having been produced was subjected to a power-on test where a voltage of 8 V was continuously applied for 50 hours at room temperature, but there was no change in the pretilt angle. The voltage holding ratio after finishing the power-on test was 99.5% or more, which confirmed that the voltage application had been conducted appropriately.

Presumably, the use of a diacrylamide type monomer as the photopolymerizable compound allowed a polymer whose degree of polymerization was relatively small (about 10 or less) to be easily formed, so that the polymer became phase-separated from the liquid crystal layer to arrive between side chains of the polymer of the alignment films, thus suppressing changes in the tilt of the side chains. Also presumably, since the main chain of the polymer of the alignment films was a polyimide type and the main chain of the polymer was a polyvinyl type, the polymer did not enter into the alignment films because of a low compatibility between the polyimide type and the polyvinyl type.

Note that the photopolymerizable compound is not limited to a diacrylamide type; similar effects of suppressing changes in the pretilt angle were also obtained with a dimethacrylamide type.

### (Comparative Example 1)

FIG. **8** shows a schematic diagram of a portion of a cross section a liquid crystal panel **510** of a liquid crystal display device **500** of Comparative Example 1.

First, a vacant panel in which to inject a liquid crystal material was produced. A pixel electrode **526** was formed on a first transparent substrate **522,** and a first alignment film **528** was formed on the pixel electrode **526,** thus preparing an active matrix substrate **520.**

Moreover, a counter electrode **546** was formed on a second transparent substrate **542,** and a second alignment film **548** was formed on the counter electrode **546,** thus preparing a counter substrate **540.** Note that the first and second alignment films **528** and **548** contained a polymer including a polyimide type main chain and a side chain having a cinnamate group.

Next, obliquely from a 40° direction with respect to the normal direction of the principal face of each of the first and second alignment films **528** and **548,** P-polarized light with a peak wavelength of 330 nm was radiated at 50 mJ/cm², thus performing a photo-alignment treatment.

Next, the active matrix substrate **520** and the counter substrate **540** were disposed so that the first alignment film **528** and the second alignment film **548** opposed each other and that the angle between the alignment treatment direction of the first alignment film **528** and the alignment treatment direction of the second alignment film **548** was 90°, and fixed so that the interspace between the active matrix substrate **520** and the counter substrate **540** was about 4 µm.

Moreover, a liquid crystal material was provided. The liquid crystal material was a nematic liquid crystal material having a negative dielectric anisotropy, with a birefringence Δn of 0.085 and a dielectric anisotropy Δ ε of -1.3. Herein, no monomer was mixed in the liquid crystal material. This liquid crystal material was placed in the vacant panel, and the injection inlet was sealed. Herein, ultraviolet light irradiation was not performed. Portions of the surfaces of the first and second alignment films **528** and **548** were observed, which did not reveal any polymer.

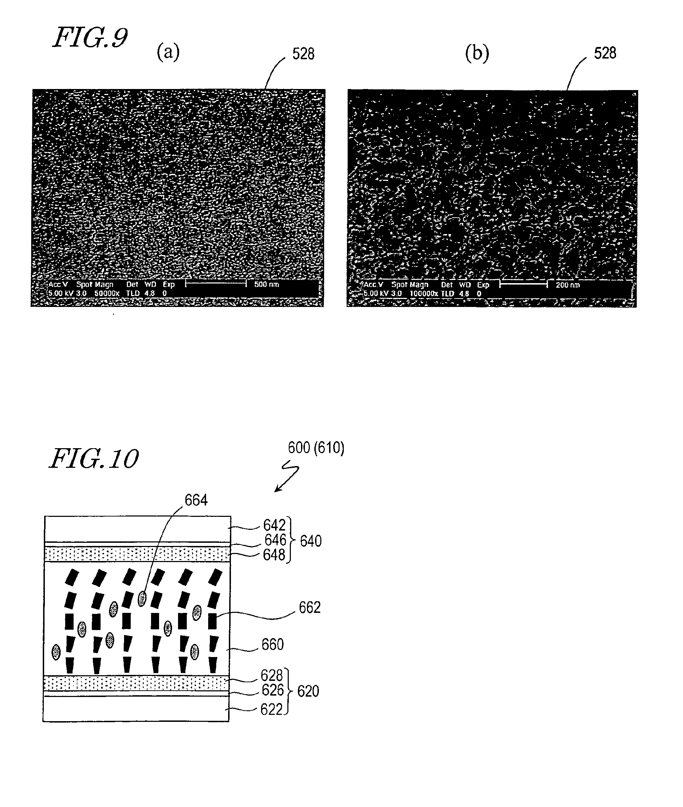

FIG. **9(a)** is a 50000 times enlarged plan view of the surface of the first alignment film **528,** and FIG. **9(b)** is a 100000 times enlarged plan view of the surface of the first alignment film **528.** As will be understood from a comparison between FIG. **9(a),** FIG. **9(b)****,** and FIG. **7(a),** FIG. **7(b)****,** no polymer was confirmed on the surface of the first alignment film **528.** Similarly, no polymer was confirmed on the surface of the second alignment film **548.**

Next, a polarizer (not shown) was attached to each of the active matrix substrate **520** and the counter substrate **540.** The liquid crystal panel **510** thus produced had an initial pretilt angle of 89.2°, and its voltage holding ratio at an ambient temperature of 70°C was 99.5% or more.

Next, the liquid crystal panel **510** having been produced was subjected to a power-on test where a voltage of 8 V was continuously applied for 50 hours at room temperature, as a result of which the pretilt angle was reduced by about 0.15°. The voltage holding ratio after finishing the power-on test was 99.5% or more, which confirmed that the voltage application had been conducted appropriately.

From this result, it is considered that, as the liquid crystal molecules became tilted in accordance with the electric field, they acted on the side chains of the polymer of the alignment films, thus changing the tilt of the side chains of the polymer of the alignment films. This is presumably because the side chains had such a high flexibility that they were susceptible to the action of the liquid crystal molecules.

On the other hand, apart from the above, the liquid crystal layer was irradiated with ultraviolet light after injecting a liquid crystal material having no monomer mixed therein, which resulted in a low initial voltage holding ratio of 95% or less. This is presumably because the photo-alignment film deteriorated due to the ultraviolet light, resulting in generation of impurities. Moreover, the initial pretilt angle increased to about 89.7°, and the alignment of the liquid crystal molecules was maintained. Note that no power-on test as to the tilt angle was conducted here because the initial voltage holding ratio was low. In comparison with the aforementioned Example 1, presumably, although impurities also occur from the photo-alignment films **128** and **148** in Example 1 because ultraviolet light is radiated after injection of the liquid crystal material, these impurities were stabilized to the alignment sustaining layers **130** and **150,** thus realizing the high initial voltage holding ratio.

### (Comparative Example 2)

FIG. **10** shows a schematic diagram of a portion of a cross section of a liquid crystal panel **610** of a liquid crystal display device **600** of Comparative Example 2.

First, a vacant panel in which to inject a liquid crystal material was produced. A pixel electrode **626** was formed on a first transparent substrate **622,** and a first alignment film **628** was formed on the pixel electrode **626.** A counter electrode **646** was formed on a second transparent substrate **642,** and a second alignment film **648** was formed on the counter electrode **646.** The first and second alignment films **628** and **648** contained a polymer including a polyimide type main chain and a side chain having a cinnamate group.

Next, obliquely from a 40° direction with respect to the normal direction of the principal face of each of the first alignment film **628** and the second alignment film **648,** P-polarized light with a peak wavelength of 330 nm was radiated at 50 mJ/cm², thus performing a photo-alignment treatment.

Next, the active matrix substrate **620** and the counter substrate **640** were disposed so that the first alignment film **628** and the second alignment film **648** opposed each other and that the angle between the alignment treatment direction of the first alignment film **628** and the alignment treatment direction of the second alignment film **648** was 90°, and fixed so that the interspace between the active matrix substrate **620** and the counter substrate **640** was about 4 µm.

Next, liquid crystal material was provided. The liquid crystal material was a nematic liquid crystal material having a negative dielectric anisotropy, with a birefringence Δn of 0.085 and a dielectric anisotropy Δ ε of -1.3. To the liquid crystal material, biphenyl acrylate was mixed as a photopolymerizable compound for forming a polymer, such that the concentration of biphenyl acrylate with respect to the liquid crystal material was 0.3wt%.

Next, this mixture was sealed in the vacant panel, and the liquid crystal layer **660** was irradiated with ultraviolet light. In this case, no polymer was observed on the surfaces of the first and second alignment films **628** and **648,** as shown in FIG. **9****.** This is presumably because of the use of an acrylate type monomer, and thus polymerization of the monomer was not promoted.

Next, a polarizer (not shown) was attached to each of the active matrix substrate **620** and the counter substrate **640.** The liquid crystal panel **610** thus produced had an initial pretilt angle of 89.1°, and its voltage holding ratio at an ambient temperature of 70°C was 99.5% or more.

Next, the liquid crystal panel **610** having been produced was subjected to a power-on test where a voltage of 8 V was continuously applied for 50 hours at room temperature, as a result of which the pretilt angle was reduced by about 0.10°. This indicates that the monomer **664** or a derivative thereof did not become phase-separated from the liquid crystal layer **660,** and did not interact with the side chains of the polymer of the alignment films **628** and **648,** so that the side chains of the polymer of the alignment films **628** and **648** were essentially unaffected by the polymer, so that the tilt of the liquid crystal molecules **662** was affected in accordance with the electric field as in Comparative Example 1, thus resulting in changes in the tilt of the side chains of the alignment films **628** and **648.**

Note that no effects of suppressing a decrease in the pretilt angle were obtained in the case where the photopolymerizable compound was a mono-substituted type either, e.g., a methacrylate type, an acrylamide type, or a methacrylamide type, instead of the aforementioned acrylate type.

Moreover, the voltage holding ratio after finishing the power-on test decreased to about 99.0%. This indicates that the monomer **664** or a derivative thereof did not become phase-separated from the liquid crystal layer **660,** and that the monomer **664** or a low molecular-weight polymer remained in the liquid crystal layer **660** and reacted with the barely existing radicals to generate impurities, thus lowering the voltage holding ratio.

Similarly, in the case where a liquid crystal material having a monomer mixed therein was inject, and light irradiation for polymerization was either omitted or performed only for a short time, thus allowing the unpolymerized monomer to remain, the initial voltage holding ratio exhibited a high value, but the voltage holding ratio lowered with lapse of time. For example, there was a case where, after lapse of 5 days, the voltage holding ratio lowered by 1% or more. It is presumable that, if such unpolymerized monomer existed, it reacted with the radicals existing in a very small amount to generate impurities, whereby the voltage holding ratio lowered.

For reference sake, the entire disclosure of Japanese Patent Application No. 2007-322274, on which the present application claims priority, is hereby incorporated by reference.

### INDUSTRIAL APPLICABILITY

A liquid crystal display device according to the present invention can be produced with a good production yield because no rubbing treatment needs to be performed for aligning the liquid crystal molecules so as to be tilted from the normal direction of a principal face of an alignment film in the absence of an applied voltage. Moreover, it can be easily produced without employing a complex fabrication apparatus. Moreover, AC image sticking can be suppressed. Furthermore, a high luminance can be realized because no alignment regulating structures need to be provided.

### REFERENCE SIGNS LIST

- **100**: liquid crystal display device
- **110**: liquid crystal panel
- **120**: active matrix substrate
- **122**: first transparent substrate
- **126**: pixel electrode
- **128**: first alignment film
- **130**: first alignment sustaining layer
- **132**: polymer
- **140**: counter substrate
- **146**: counter electrode
- **148**: second alignment film
- **150**: second alignment sustaining layer
- **152**: polymer
- **160**: liquid crystal layer
- **162**: liquid crystal molecules

## Claims

1. A liquid crystal display device comprising an active matrix substrate, a counter substrate, and a vertical-alignment type liquid crystal layer provided between the active matrix substrate and the counter substrate, wherein
at least one of the active matrix substrate and the counter substrate includes a photo-alignment film, the liquid crystal display device further comprising:
an alignment sustaining layer provided between the photo-alignment film and the liquid crystal layer, the alignment sustaining layer containing a polymer resulting from polymerization of a photopolymerizable compound.

2. The liquid crystal display device of claim 1, wherein the photo-alignment film contains a polymer including a main chain and a side chain, the side chain having a cinnamate group.

3. The liquid crystal display device of claim 1 or 2, wherein,
the liquid crystal display device has a plurality of pixels; and
in each of the plurality of pixels, the liquid crystal layer has a plurality of liquid crystal domains with respectively different reference alignment azimuths.

4. The liquid crystal display device of claim 3, wherein each of the active matrix substrate and the counter substrate includes the photo-alignment film, the plurality of liquid crystal domains being four liquid crystal domains.

5. The liquid crystal display device of any of claims 1 to 4, wherein a pretilt angle of liquid crystal molecules in the liquid crystal layer is in a range from 85° to 89.7°.

6. The liquid crystal display device of any of claims 1 to 5, wherein the photopolymerizable compound has at least one ring structure or condensed ring structure and at least one polymerizable functional group chemically bonded to the ring system or condensed ring system.

7. The liquid crystal display device of any of claims 1 to 6, wherein,
the photopolymerizable compound is a polymerizable monomer; and
the polymerizable monomer is represented by the general formula P1-A1-(Z1-A2)n-P2 (where P1 and P2 are, independently, acrylate, methacrylate, acrylamide, methacrylamide, vinyl, vinyloxy, or an epoxy group; A1 and A2 represent, independently, 1,4-phenylene or naphthalene -2,6-diyl group; Z1 is a -COO- or -OCO- group or a single bond; and n is 0, 1, or 2).

8. The liquid crystal display device of claim 7, wherein P1 and P2 are acrylate groups; Z1 is a single bond; and n is 0 or 1.

9. The liquid crystal display device of claim 7, wherein P1 and P2 are methacrylate groups; Z1 is a single bond; and n is 0 or 1.

10. The liquid crystal display device of claim 7, wherein P1 and P2 are acrylamide groups; Z1 is a single bond; and n is 0 or 1.

11. The liquid crystal display device of claim 7, wherein P1 and P2 are methacrylamide groups; Z1 is a single bond; and n is 0 or 1.

12. A production method for a liquid crystal display device, comprising:
a step of providing an active matrix substrate and a counter substrate, where light is radiated to form a photo-alignment film over at least one of the active matrix substrate and the counter substrate;
a step of forming a liquid crystal layer between the active matrix substrate and the counter substrate by providing a liquid crystal material between the active matrix substrate and the counter substrate, the liquid crystal material having a photopolymerizable compound mixed therein, and the photo-alignment film regulating liquid crystal molecules in the liquid crystal layer so that the liquid crystal molecules are aligned with a tilt from a normal direction of a principal face of the photo-alignment film in the absence of an applied voltage; and
a step of forming an alignment sustaining layer between the photo-alignment film and the liquid crystal layer by polymerizing the photopolymerizable compound through light irradiation.

13. The production method for a liquid crystal display device of claim 12, wherein, in the step of forming the photo-alignment film, the photo-alignment film contains a polymer including a main chain and a side chain, the side chain having a cinnamate group.

14. The production method for a liquid crystal display device of claim 12 or 13, wherein, in the step of forming the alignment sustaining layer, the light irradiation is
performed without applying a voltage across the liquid crystal layer.

15. The production method for a liquid crystal display device of any of claims 12 to 14, wherein, in the step of forming the photo-alignment film, the light has a wavelength in a range from 250 nm to 400 nm.

16. The production method for a liquid crystal display device of any of claims 12 to 15, wherein, in the step of forming the photo-alignment film, light is radiated from a direction which is inclined with respect to a normal direction of a principal face of at least one of the active matrix substrate and the counter substrate by no less than 5° and no more than 85°.

17. The production method for a liquid crystal display device of any of claims 12 to 16, wherein, in the step of forming the photo-alignment film, the light is unpolarized light.

18. The production method for a liquid crystal display device of any of claims 12 to 16, wherein, in the step of forming the photo-alignment film, the light is linearly polarized light, elliptically polarized light, or circularly polarized light.
